# EUROPEAN PATENT APPLICATION

(11) **EP 1 616 810 A1**
(43) Date of publication of application: **18.01.2006**
(21) Application number: 04722876.2
(22) Date of filing: 24.03.2004
(51) Int. Cl.: B65D 51/30

(54) **LID COMPRISING A DESICCANT CONTAINER**

(30) Priority: 24.03.2003 ES 200300723 U
(71) Applicant: Fabri-Plast S.A., 08185 Lli A De Vall (Barcelona) (ES)
(72) Inventor: MAYOR LOPEZ, Adela, 08185 LLICA DE VALL (Barcelona) (ES)
(74) Representative: Carpintero Lopez, Francisco
(86) International application number: PCT/ES2004/000132
(87) International publication number: WO 2004/085279

(57) **Abstract**

Stopper with a container for dessicator applicable to vessels with a threaded cylindrical neck, basically comprised of a part that constitutes the body (1) of the stopper itself, another that constitutes the safety seal (4) and a third part that constitutes the container for the dessicator (7) that is inserted inside the stopper, and which has the special characteristic that said parts form a single-piece body that can be obtained from a single injection mould.

## Description

### OBJECT OF THE INVENTION

The present invention relates to a stopper which incorporates, forming an integral part of it, a container for a dessicator, for use in vessels with a cylindrical neck in which the stopper is screwed, the vessels intended to contain any type of product, preferably for use in the pharmaceutical sector.

The novelty of the stopper consists in that the stopper body, safety seal and the corresponding internal container for the dessicator are constructed in a single piece.

### BACKGROUND OF THE INVENTION

Stoppers are currently available having a dessicator container and a safety seal, in which the dessicator is preferably silica-gel, preferably for use in the pharmaceutical sector.

Conventional stoppers currently commercialised are made from three independent parts, one constituting the body of the stopper, another constituting the safety seal that is inserted in the stopper and a third constituting the container for the dessicator, which will also be inserted inside the stopper.

Obviously, the construction of the stopper in three different parts implies that each part must be obtained independently, so that a different mould is required for each part, resulting in a high cost in moulds required to obtain the corresponding injection of the various parts.

In addition, the fact that the stopper is embodied in three parts requires their mounting or assembly to one another, which may be performed manually or automatically, in either case implying an additional cost in the manufacture of the stopper itself.

Finally, another drawback of the stoppers cited is that the assembly of three parts can lead to quality problems due to the separation of the parts during the use of the products.

### DESCRIPTION OF THE INVENTION

The stopper taught herein has been conceived to solve the drawbacks described above so that, being applicable to any type of vessel having a threaded neck in which the stopper can be screwed, it has the special characteristic that the seal, the body of the stopper and the container constitute a single piece, so that it can be obtained in a single injection mould, therefore reducing the cost and investment in moulds required to obtain the various parts as when constructed conventionally, as well as reducing the cost of performing the assembly, as a single-piece body does not require any assembly, while in addition increasing the lifetime of the stopper assembly as its single-piece construction will not lead to quality problems, separation problems, etc.

Specifically, the stopper constructed as a single piece body of the invention comprises an inner concentric part that constitutes the container for the dessicator, an outer wall with an inner thread so that between said outer wall and the inner concentric wall that delimits the dessicator container is determined the housing for the neck or, in other words, the wall of the neck corresponding to the vessel in which the stopper is inserted, with the special characteristic that the stopper also incorporates the corresponding seal level with its inferior edge, forming a single piece with the body of the stopper and joined to it by easily detachable parts that allow a simple breaking of the seal or detachment of the strip that constitutes said seal.

### DESCRIPTION OF THE DRAWINGS

To complete the description being made and in order to aid a better understanding of the characteristics of the invention, according to a preferred example of embodiment, a set of drawings is accompanied forming an integral part of the description where, for purposes of illustration only and in a non-limiting sense the following is shown:

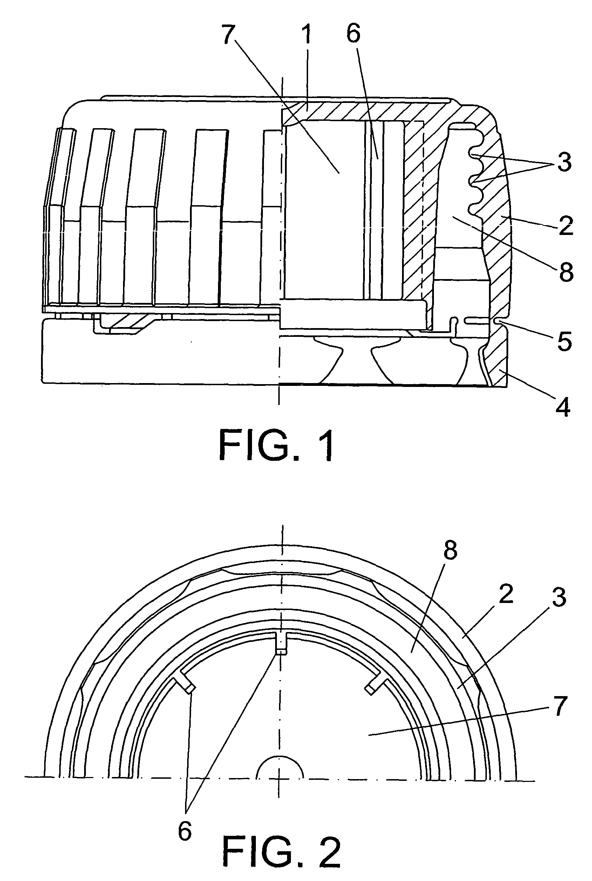

Figure 1.- Shows a side elevation view of the stopper object of the invention, with a cross-section view of one of its quarters.
Figure 2.- Shows a plan view corresponding to one half of the stopper represented in the previous figure.

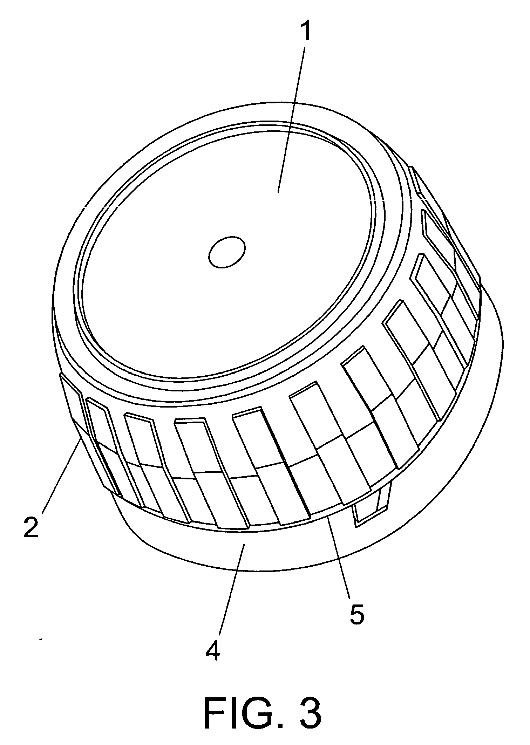

Figure 3.- Shows, finally, a representation according to a general outer perspective view of the stopper of the invention.

### PREFERRED EMBODIMENT OF THE INVENTION

In view of the figures it can be seen that the stopper of the invention is constituted from a body (1) in which is determined an outer wall (2) with inner ribs (3) determining a thread for coupling to the corresponding neck of the vessel in which it is used, said outer wall (2) being provided with a seal (4) level with its lower edge, the two parts being connected by points (5) that are easily breakable to allow detaching the strip that will constitute said seal (4).

Internally and concentrically it is provided with a plurality of ribs (6) projecting inwards radially and separated from the peripheral wall (2), determining between the ribs (6) a concentric area 87) corresponding to the dessicator container as such, while between the ribs (6) and the rear wall (2) is determined a channel (8) in which is placed the neck of the container in which the stopper is used.

The stopper thereby constructed includes in a single piece the stopper body (1), the dessicator container and the seal, and as stated in the present description it can be obtained from a single injection mould, thereby reducing manufacturing costs, without requiring assemblies of the various parts as it is made as a single piece or body, eliminating the corresponding assembly costs and the quality problems resulting from possible maladjustments or separations of the stopper parts, as is generally the case with stoppers having independent parts.

## Claims

1. Stopper with a container for dessicator, **characterised in that** it is constituted by a single-piece body that comprises the part corresponding to the body of the stopper, an inner container for dessicator and a safety seal, the assembly being formed in a single injection mould.
